(19) Europäisches Patentamt
European Patent Office
Office européen des brevets

(11) **EP 2 093 557 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(51) Int Cl.:
**G01N 13/02** *(2006.01)*       **G01B 11/255** *(2006.01)*
**G01B 11/26** *(2006.01)*

(21) Anmeldenummer: **08019126.5**

(22) Anmeldetag: **31.10.2008**

(54) **Verfahren und Vorrichtung zur Bestimmung des Kontaktwinkels aus dem Tropfenkrümmungsradius durch optische Distanzmessung**

Method and device for determining the contact angle from the drop curvature radius by measuring the optical distance

Procédé et dispositif destinés à la détermination de l'angle de contact à partir du degré de courbure de goutte par mesure de distance optique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.01.2008   DE 102008003387**

(43) Veröffentlichungstag der Anmeldung:
**26.08.2009   Patentblatt 2009/35**

(73) Patentinhaber: **Krüss GmbH Wissenschaftliche Laborgeräte**
**22453 Hamburg (DE)**

(72) Erfinder:
• **Friedrich, Bernd**
  **25474 Hasloh (DE)**
• **Frerichs, Jan-Gerd, Dr.**
  **22850 Norderstedt (DE)**
• **Kortz, Eike**
  **33613 Bielefeld (DE)**

(74) Vertreter: **Hauck Patentanwaltspartnerschaft mbB**
**Postfach 11 31 53**
**20431 Hamburg (DE)**

(56) Entgegenhaltungen:
DE-A1-102005 059 352     US-A- 4 572 628
US-A- 5 106 183

• ALOK AWASTHI ET AL: "Measurement of contact angle in systems involving liquid metals", MEASUREMENT SCIENCE AND TECHNOLOGY, IOP, BRISTOL, GB, Bd. 7, Nr. 5, 17. Januar 1996 (1996-01-17) , Seiten 753-757, XP020064036, ISSN: 0957-0233, DOI: 10.1088/0957-0233/7/5/005

EP 2 093 557 B1

# Beschreibung

Die Erfindung betrifft ein Verfahren und eine Vorrichtung zur Bestimmung des Kontaktwinkels zwischen einer Probenoberfläche, einer gasförmigen Umgebung und einem auf der Probenoberfläche angeordneten Tropfen mit einer gekrümmten Oberfläche, einer Symmetrieachse und einem definierten Volumen.

Hierbei ist der Kontaktwinkel der Winkel zwischen der Tangente an die Kontur eines Tropfens und der Geraden durch die Dreiphasenpunkte des Tropfens auf der Probenoberfläche, wobei ein Tropfen einer bekannten Flüssigkeit auf einer zu charakterisierenden Probenoberfläche untersucht wird. Dieser Winkel wird u.a. durch die Oberflächenspannung des Tropfens, die Oberflächenenergie der betrachteten Probenoberfläche und die Grenzflächenwechselwirkung zwischen dem Tropfen und der Probenoberfläche beeinflusst. Durch Bestimmen der Kontaktwinkel für Tropfen verschiedener Flüssigkeiten mit bekannten Oberflächenspannungen, kann auf die Oberflächenenergie der Probe geschlossen werden.

Es gibt verschiedene optische Verfahren zur Bestimmung des Kontaktwinkels. Zum einen wird, wie z.B. in DE 197 54 765 C1 oder KR 102 002 007 479 7 A, ein Schattenbildverfahren angewendet, bei dem eine seitliche Betrachtung des auf einer Probe aufliegenden Tropfens mittels einer Kamera erfolgt und anhand der zweidimensionalen Aufnahme der Tropfenkontur und einer anschließenden, geeigneten Bildverarbeitung der Kontaktwinkel bestimmt wird. Der Nachteil dieses Tropfenkontur- oder Schattenbildverfahrens liegt darin, dass der zu betrachtende Tropfen vollständig von der Kamera erfasst werden muss.

Zum anderen kann der Kontaktwinkel mittels eines Aufsichtverfahrens bestimmt werden. Hierbei wird eine oberhalb der Probe angeordnete Optik sowie eine Lichtquelle verwendet, um ein Bild des Tropfens aufzunehmen. Dabei wird der Tropfen auf einer Probenoberfläche im Auflicht beleuchtet, so dass der Tropfendurchmesser mittels einer Bildanalyse bestimmt werden kann. Anhand des Durchmessers des Tropfens kann bei bekanntem Tropfenvolumen der Kontaktwinkel berechnet werden.

Hierzu ist aus der JP 60 085 353 A bekannt, einen Tropfen mittels Aufsichtverfahren abzubilden und anhand der Aufnahme den Durchmesser der Kontaktfläche des Tropfens mit der Probe und die Höhe des Tropfens zu bestimmen. Diese beiden Werte dienen zur Berechnung des Kontaktwinkels. Die WO 03/073045 A1 offenbart ferner ein Verfahren, bei der ein Tropfen auf einer Probenoberfläche mittels einer über ihm angeordneten Kamera optisch erfasst wird. Anschließend wird die Auflagefläche des Tropfens durch eine mathematische Näherung der Tropfenfläche an eine Kreisfläche berechnet.

Auch bei den mittels der bisher bekannten Aufsichtvorrichtungen durchgeführten Verfahren zur Bestimmung des Kontaktwinkels, ist es notwendig, den Tropfen vollständig abzubilden, so dass die Bestimmung eines Kontaktwinkels bei einer sehr großflächigen oder schwer zugänglichen, beispielsweise in einer Kavität befindlichen Probenoberfläche nicht oder nur mit großem Aufwand möglich ist. Auch die Messung kleiner Kontaktwinkel, also an stark spreitenden Tropfen, ist häufig nicht möglich, da diese Tropfen aufgrund ihres großen Durchmessers durch das Gesichtsfeld der Kameraoptik oft nicht vollständig erfasst werden können.

Des Weiteren ist ein Nachteil der bekannten Verfahren mit Aufsichtvorrichtung die in der Regel durch die Transparenz des Tropfens bedingte kontrastarme Abbildung bezogen auf die Probenoberfläche. Hierdurch wird eine Bildanalyse erschwert.

Aus dem Artikel "Measurement of Contact Angle in Systems Involving Liquid Metals", Meas. Sci. Technol. 7 (1996) 753-757, wird eine flüssige Metallprobe in einem speziellen Probengefäß angeordnet. Der Krümmungsradius des flüssigen Metalls beeinflusst die Größe der Abbildung einer Öffnung des Probengefäßes. Auf dieser Grundlage soll ein Kontaktwinkel berechnet werden können.

Aus dem US-Patent Nr. 4,572,628 sind ein Verfahren und eine Vorrichtung zur Messung des Krümmungsradius der Kornea oder einer sonstigen Linse bekannt geworden.

Es ist deshalb Aufgabe der Erfindung, ein Verfahren und eine Vorrichtung zur Messung des Kontaktwinkels bereitzustellen, die unabhängig von einer vollständigen Abbildung eines Tropfens im Gesichtsfeld der verwendeten Aufnahmeoptik verwendet werden können. Auf diese Weise können auch Tropfen, die nicht vollständig zugänglich sind, zur Kontaktwinkelmessung verwendet werden. Außerdem ist es Aufgabe der Erfindung, ein Verfahren und eine Vorrichtung bereitzustellen, die eine robusteres, kontrastreicheres Verfahren darstellen, um eine stabilere und zuverlässigere Bildanalyse zu ermöglichen.

Diese Aufgaben werden gelöst durch die Verfahren zur Bestimmung des Kontaktwinkels mit den in den Ansprüchen 1 und 2 aufgeführten Schritten und durch die Kontaktwinkelmessvorrichtungen mit den Merkmalen der Ansprüche 15 und 16.

Bei dem erfindungsgemäßen Verfahren nach Anspruch 1 wird in einem ersten Schritt ein Objekt unter Ausnutzung der Reflexionseigenschaften der Oberfläche eines Tropfens an der Tropfenoberfläche abgebildet, wobei die Lage des Objekts zu der optischen Achse eines optischen Messsystems und die Lage des Objekts zu der Probenoberfläche bekannt ist und wobei die Symmetrieachse des Tropfens in der optischen Achse eines Messsystems angeordnet ist. Dieser Abbildung eines Objekts an der Tropfenoberfläche liegt die Annahme zugrunde, dass die Tropfenoberfläche als ein konvexer (Kugel-)Spiegel betrachtet werden kann.

Bevorzugt wird eine Tropfenflüssigkeit mit sowohl bekannten Oberflächeneigenschaften als auch guten Reflexionseigenschaften verwendet, wie z.B. Wasser, Diiodmethan, Ethanol, Ethylenglykol. Die Verwendung anderer Flüssigkeiten ist auch möglich.

Das optische Messsystem ist bevorzugt dazu ausgestaltet, um die Abbildung des Objekts zu fokussieren und mit optimaler Größe aufzunehmen. Das optische Messsystem umfasst eine geeignete Optik und eine Kamera, die mit einem Bildanalysesystem einschließlich einer Bilderkennung und einer Bildverarbeitung derart verbunden ist, dass eine automatisierte Aufnahme des abgebildeten Objekts möglich ist. Vorzugsweise wird eine digitale oder analoge Videokamera verwendet. Andere Aufnahmegeräte, wie z.B. eine Fotokamera, sind auch denkbar.

Vorzugsweise wird die Lage des optischen Messsystems und der abzubildenden Objekte mittels eines oder einer Vielzahl von Abstandssensoren gemessen, so dass ein definierter Abstand eingestellt und aufrechterhalten werden kann bzw. ein eingestellter Abstand genau bestimmt werden kann. Dies kann beispielsweise mittels eines einfachen mechanischen Abstandhalters erfolgen, es sind aber auch andere Sensoren denkbar, z.B. elektrische (kapazitive oder induktive) oder optische (Laser- oder Bild-) Sensoren, die mit einem geeigneten Abstandhalter elektronisch gekoppelt sind.

Es ist in einer weiteren bevorzugten Ausführungsform möglich, anstelle eines automatischen elektronischen Bildanalysesystems ein Okular zur Erkennung der Abbildungen zu verwenden und die Bilderkennung visuell vorzunehmen.

Bei dem Verfahren nach Anspruch 1 ist die optische Achse des optischen Messsystems in der Symmetrieachse des Tropfens angeordnet. Hierbei ist eine annähernde Übereinstimmung der beiden Achsen ausreichend.

Es ist aber auch möglich, dass die Symmetrieachse von der optischen Achse beabstandet verläuft.

Der Tropfen liegt bevorzugt auf einer horizontalen, ebenen Fläche. Auf diese Weise ist er ortsfest angeordnet und die Symmetrieeigenschaften des Tropfens werden nicht gestört.

Bevorzugt ist das Volumen des Tropfens möglichst klein, z.B. nicht größer als ein Mikroliter. Es ist jedoch auch möglich, ein größeres Volumen zu verwenden. Ein Tropfen von maximal einem Mikroliter eignet sich besonders gut, da dies die Annahme eines relativ einfachen Modells des Tropfens erlaubt, ohne den Gravitationseinfluss auf den Tropfen berücksichtigen zu müssen, wie es bei größeren Volumina mittels der Gauß-Laplace-Gleichung der Fall ist.

In einem zweiten Schritt des Verfahrens nach Anspruch 1 wird die Distanz zwischen der Abbildung und der Symmetrieachse des Tropfens gemessen.

Hierbei stimmt die Symmetrieachse des Tropfens mit der optischen Achse des optischen Messsystems überein, da auf diese Weise besonders einfach mittels der bekannten Lage des Objekts zu der Probenoberfläche und zu der optischen Achse die Distanz der Abbildung zu der optischen Achse bestimmt werden kann.

Diese Abstandsmessung wird vorzugsweise mittels des Bildanalysesystems durchgeführt, wobei eine geeignete Bildverarbeitung zur Ermittlung des Abstands der Abbildung zu der optischen Achse verwendet wird.

In einer speziell bevorzugten Ausführungsform wird zur Ermittlung des Abstands der Abbildung zu der Symmetrieachse des Tropfens mittels der Bildauswertung nur derjenige Bereich des Tropfens durch das optische Messsystem erfasst, in dem die Abbildung und die Symmetrieachse des Tropfens liegen. Dies hat den Vorteil, dass nicht zwingend der gesamte Tropfen in dem Gesichtsfeld des optischen Messsystems liegen muss, so dass das Verfahren auch für Tropfen in Kavitäten, teilweise verdeckte Tropfen oder stark spreitende Tropfen geeignet ist. Eine Berechnung von Tropfendurchmesser und Tropfenhöhe aus den Messparametern ist ebenfalls möglich.

In einem dritten Schritt wird anschließend der Krümmungsradius des Tropfens mittels der gemessenen Distanz bestimmt. Aufgrund der bekannten Lage des Objekts zu der optischen Achse des optischen Messsystems, der bekannten Lage des Objekts zu der Probenoberfläche und dem bekannten Tropfenvolumen lässt sich hierbei die gemessene Distanz mit dem Krümmungsradius des aufliegenden Tropfens korrelieren. Eine genauere Beschreibung für die Verwendung mit zwei Objekten befindet sich weiter unten.

Mittels des Krümmungsradius wird der Kontaktwinkel in einem vierten Schritt bestimmt. Dies wird ebenfalls weiter unten erläuternd beschrieben.

Bei dem Verfahren nach Anspruch 2 umfasst der erste Schritt das Abbilden einer Vielzahl von Objekten an der Tropfenoberfläche, wobei die Lage der Objekte zueinander und zu der Probenoberfläche bekannt ist. Der zweite Schritt umfasst dann das Messen der Distanzen der Abbildungen zueinander oder das Messen der Distanzen der Abbildungen zu der Symmetrieachse des Tropfens.

Speziell bevorzugt umfasst der erste Schritt das Abbilden zweier Objekte auf zwei Abbildungen. In diesem Fall kann die Distanz zwischen den beiden Abbildungen als Messgröße für den Krümmungsradius verwendet werden. Dies hat den Vorteil, dass die Symmetrieachse des Tropfens nicht zwingend mit der optischen Achse der Kamera übereinstimmen muss. Auf diese Weise vereinfacht sich die Anordnung des Messaufbaus.

Für die Durchführung einer Vielzahl von Messungen zur Bestimmung des Kontaktwinkels mittels zweier Abbildungen ist die Lage des Tropfens zur optischen Achse vorzugsweise reproduzierbar.

In einer weiteren bevorzugten Ausführung umfasst der erste Schritt des Verfahrens das Abbilden dreier Objekte auf drei Abbildungen.

Vorzugsweise umfasst der zweite Schritt ein Legen eines Kreises durch die Abbildungen und ein Ermitteln des Radius des Kreises als Messgröße zur Berechnung der Krümmung der Oberfläche des Tropfens. In dieser speziellen Ausführungsform ist das Verfahren unabhängig von der Symmetrieachse des Tropfens, so dass die Lage der abzubildenden Objekte zu der Symmetrieachse des Tropfens nicht bekannt sein muss. Es werden zunächst die Lagen der Abbildungen zueinander mittels des Bildanalysesystems ermittelt. Anschließend wird ein Kreis berechnet, der durch die Lagen der drei Abbildungen eindeutig beschrieben werden kann. Danach wird der Radius des berechneten Kreises als Messgröße für die Tropfenkrümmung bestimmt, aus der der Kontaktwinkel mittels der unten aufgeführten Vorgehensweisen bestimmt werden kann.

Speziell bevorzugt handelt es sich bei den Objekten um kreisförmig angeordnete oder kreisförmig ausgestaltete Objekte. Das Abbilden eines Kreises auf einen Tropfen ermöglicht es besonders gut, mittels eventuell auftretender Verzerrungen der Abbildungen der Objekte Aussagen über die Symmetrieeigenschaften des Tropfens zu treffen.

Eine weitere bevorzugte Verfahrensweise umfasst das Abbilden einer Vielzahl von Objektpaaren mit jeweils einem ersten Objekt und einem zweiten Objekt. Anschließend werden die Distanzen zwischen der Abbildung des ersten Objekts und der Abbildung des zweiten Objekts für eine Vielzahl von Objektpaaren bestimmt und aus den jeweils berechneten Krümmungsradien ein Mittelwert gebildet.

Bevorzugt erstreckt sich die zu messende Distanz zwischen der Abbildung des ersten Objekts und der Abbildung des zweiten Objekts bildanalytisch betrachtet von einem Lichtintensitätsmaximum der Abbildung des ersten Objekts bis zu einem Lichtintensitätsmaximum der Abbildung des zweiten Objekts.

In einer weiteren bevorzugten Ausführungsform wird die Distanz zwischen den o.a. Abbildungen über die Ermittlung eines Maximums der Lichtintensität unter Verwendung eines bildanalytischen Verfahrens, zum Beispiel über die Flächenschwerpunktberechnung, festgelegt. Dieses Verfahren kann beispielsweise eingesetzt werden, wenn kein eindeutiges Intensitätsmaximum bei der Abbildung eines Objektes gefunden werden kann.

Bevorzugt umfasst das Verfahren einen weiteren Schritt zur Berechnung der Streuung der Distanzen der Abbildungen der Objekte zu der Symmetrieachse des Tropfens. Hierbei werden vorzugsweise kreisförmig angeordnete Objekte durch die Reflexionseigenschaft der Tropfenoberfläche abgebildet. Besonders bevorzugt befinden sich die kreisförmig angeordneten Objekte symmetrisch zu der optischen Achse des optischen Messsystems. In einem sich anschließenden Schritt wird vorzugsweise die Genauigkeit des Kontaktwinkels berechnet, der mittels des ermittelten Krümmungsradius bestimmt worden ist, der wiederum aus den Distanzen der Abbildungen zu der Symmetrieachse des Tropfens bestimmt worden ist.

Als Objekte, die auf der Oberfläche des Tropfens abgebildet werden, werden vorzugsweise Lichtquellen verwendet.

Speziell bevorzugt handelt es sich bei den Lichtquellen um Leuchtdioden, beispielsweise um monochromatische Leuchtdioden oder weiße Leuchtdioden. Diese haben den Vorteil, dass sie eine kleine punktförmige Leuchtfläche umfassen.

Es ist in einer weiter bevorzugten Ausführungsform auch möglich, ein Leuchtdiodenfeld als abzubildendes Objekt zu verwenden. Diese können beispielsweise verschiedene einzeln aktivierbare Leuchtdioden umfassen, so dass durch Variation der Schaltzustände der Leuchtdiodenmatrix unterschiedliche Objektmuster erzeugt werden können. Auf diese Weise können Zusatzinformationen über die Tropfengeometrie erhalten werden. Ferner ermöglicht ein Leuchtdiodenfeld durch geeignete Auswahl der einzeln aktivierbaren Leuchtdioden eine optimale Beleuchtung des Tropfens, ohne dass der Messaufbau verändert werden muss.

Ferner bevorzugt handelt es sich bei den abzubildenden Objekten um strahlende Lichtquellen.

In einer weiteren Ausführungsform können bei einer insgesamt ausreichenden Beleuchtung der Tropfenoberfläche auch andere Objekte, wie z.B. Gitter, verwendet werden.

Vorzugsweise erfolgt das Bestimmen des Kontaktwinkels mittels einer optisch-geometrischen Gleichung in Abhängigkeit von der in einem zweiten Schritt des erfindungsgemäßen Verfahrens ermittelten Distanz der Abbildung zu der Symmetrieachse des Tropfens oder der Distanzen zweier Abbildungen zueinander. Hierbei wird angenommen, dass auf eine Flüssigkeitsoberfläche auftreffende Lichtstrahlen nach dem Brechungsgesetz reflektieren. Da sich kleinste Mengen von Flüssigkeiten in Abhängigkeit von den Oberflächenspannungen zu Tropfen unterschiedlicher Krümmung auf einer Festkörperoberfläche formen, wird die Tropfenoberfläche als konvex gekrümmter (Kugel-) Spiegel betrachtet. Zur Bestimmung des Kugelradius werden die Abbildungen der Objekte mit einer geeigneten Optik und Bildverarbeitung analysiert. Bei konstantem Tropfenvolumen besteht eine direkte Abhängigkeit der Abbildungen und dem Kontaktwinkel $\varphi$ des Tropfens zur Probenoberfläche.

Für die Messung der Distanz von einer Abbildung zur optischen Achse stellt sich dieses Verhalten exemplarisch wie folgt dar:

$$\varphi = \cos^{-1}\left(-2\cos\left(\frac{1}{3}\left(\cos^{-1}\left(1 - \frac{3\left(1+\frac{G}{B}\right)^3 V_T}{16\pi g^3}\right) + 4\pi\right)\right)\right).$$

Hierbei sind $V_T$ das bekannte Tropfenvolumen, G die bekannte Gegenstandshöhe, d.h. der Abstand der optischen Achse zu dem Objekt, g der bekannte Abstand des Objektes zur Probenoberfläche, wobei hier die Tropfenhöhe aufgrund der geringen Tropfengröße vernachlässigt wird, und B die Bildhöhe, d.h. die zu messende Distanz zwischen der optischen Achse und der Abbildung.

Weiter bevorzugt erfolgt die Bestimmung des Kontaktwinkels mittels einer Korrelationstabelle. Hierbei wird mittels eines beliebigen Kontaktwinkelmessaufbaus der Kontaktwinkel eines Tropfens auf unterschiedlichen Probenoberflächen bestimmt. Durch Anwenden des erfindungsgemäßen Verfahrens auf den gleichen Tropfen werden zugleich die Distanzen zwischen Abbildungen zueinander und Distanzen der Abbildungen zu der optischen Achse auf den gleichen Probenoberflächen ermittelt. Diese Distanzen, die mit dem Tropfenkrümmungsradius korrelieren, können in einer Tabelle den entsprechenden Kontaktwinkeln gegenübergestellt werden. Diese Tabelle wiederum wird im Bildanalysesystem hinterlegt.

In einer weiteren bevorzugten Durchführung des Verfahrens erfolgt das Bestimmen des Kontaktwinkels mittels einer Regressionsanalyse. Hierbei wird der Zusammenhang zwischen dem Krümmungsradius des Tropfens und dem Kontaktwinkel für diskrete Stützstellen, also exemplarische Kontaktwinkelwerte, wie bei dem zuvor beschriebenen Korrelationsverfahren empirisch ermittelt. Anschließend wird eine geeignete Regression durchgeführt. Die sich ergebende Funktion ermöglicht eine direkte Berechnung des Kontaktwinkels aus den mit dem erfindungsgemäßen Verfahren gemessenen Distanzen und wird im Bildanalysesystem hinterlegt.

Die erfindungsgemäße, auf einer Bildanalyse basierende, Vorrichtung zur Messung des Kontaktwinkels zwischen einer horizontal ausgerichteten Probenoberfläche, einer gasförmigen Umgebung und einem auf der Probenoberfläche angeordneten Tropfen umfasst eine Probe mit zu charakterisierender Oberfläche, eine Tropfendosierungsvorrichtung zur Aufbringung eines Tropfens mit einem definierten Volumen auf die Probenoberfläche, eine Lichtquelle, deren Lage bekannt ist und die auf der Tropfenoberfläche abbildbar ist, eine Kamera mit einer Optik zur Erfassung der Abbildung der Lichtquelle auf dem Tropfen, wobei die Lage der Kamera zur Probenoberfläche bekannt ist, und ein Bildanalysesystem, das mit der Kamera verbunden ist, wobei das Bildanalysesystem dazu ausgestaltet ist, die Distanz der Abbildung der Lichtquelle zu der Symmetrieachse des Tropfens zu bestimmen. Hierbei umfasst das Bildanalysesystem eine Bilderkennung und eine Bildverarbeitung, mit denen eine automatisierte Aufnahme und Auswertung der Abbildungen der Lichtquelle möglich ist.

Besonders bevorzugt liegt die Symmetrieachse des Tropfens auf der optischen Achse der Kameraoptik. Auf diese Weise ist eine Bestimmung der Distanz der Abbildung der Lichtquelle zu der Symmetrieachse des Tropfens besonders einfach.

Vorzugsweise handelt es sich bei der Kamera um eine digitale oder analoge Videokamera, deren Optik sich für eine Aufnahme der Abbildungen eignet, die durch die Reflexionseigenschaften der Oberfläche des Tropfens hervorgerufen werden. Es sind aber auch andere lichtempfindliche Sensoren anstelle einer Kamera denkbar.

In einer speziell bevorzugten Ausführungsform ist die Lichtquelle kreisförmig um die optische Achse der Kamera angeordnet. Hierbei kann die Lichtquelle beispielsweise symmetrisch zu der optischen Achse ausgerichtet sein.

Bei der Bildanalysevorrichtung nach Anspruch 16 umfasst die Kontaktwinkelmessvorrichtung eine Vielzahl von Lichtquellen. Diese können sowohl individuell als auch kreisförmig von der optischen Achse beabstandet sein. Die Lichtquellen können hierbei beispielsweise symmetrisch zu der optischen Achse angeordnet sein. Somit lassen sich Aussagen über die Symmetrieeigenschaften des Tropfens treffen.

Dieses Bildanalysesystem ist dazu geeignet, die Distanzen der Abbildungen zueinander zu bestimmen. Anschließend kann ein Mittelwert der aus den Distanzen der Abbildungen der Lichtquellen zueinander bestimmten Kontaktwinkel berechnet werden, so dass die Genauigkeit des ermittelten Kontaktwinkels erhöht.

In einer speziell bevorzugten Ausführungsform umfasst die Kontaktwinkelmessvorrichtung zwei Lichtquellen. Hierbei kann die Distanz zwischen den beiden Abbildungen als Messgröße für den Krümmungsradius verwendet werden. Bei der Verwendung von nur zwei Lichtquellen, deren Abstand zueinander bekannt ist, ist der Aufwand zur Ermittlung der Distanz der beiden entsprechenden Abbildungen relativ gering und die Messung kann somit schnell durchgeführt werden.

In einer weiteren, speziell bevorzugten Ausführungsform umfasst die Bildanalysevorrichtung drei Lichtquellen, die vorzugsweise kreisförmig und symmetrisch um die optische Achse angeordnet sind. Bei dieser Ausführungsform wird ein Kreis durch die Abbildungen gelegt, dessen Koordinaten zur Ermittlung des Krümmungsradius verwendet werden. Hierbei ist es nicht notwendig, dass die Lagen der Abbildungen der Lichtquellen zu der Symmetrieachse des Tropfens bekannt sind.

Vorzugsweise handelt es sich bei den Lichtquellen um diffus strahlende Lichtquellen.

In einer weiteren bevorzugten Ausführungsform sind die Lichtquellen punktförmig ausgestaltet, so dass lediglich eine kleine Leuchtfläche abgebildet wird. Dies erleichtert die Identifikation der Abbildungen der Lichtquellen und erhöht die Genauigkeit des zu ermittelnden Kontaktwinkels.

Besonders bevorzugt umfasst die Bildanalysevorrichtung Leuchtdioden.

Speziell bevorzugt handelt es sich bei den Leuchtdioden um monochromatische Leuchtdioden, weiße Leuchtdioden oder um ein Leuchtdiodenfeld. Letzteres kann beispielsweise verschiedene, einzeln aktivierbare Leuchtdioden umfassen, so dass durch Variation der Schaltzustände der Leuchtdiodenmatrix unterschiedliche Objektmuster erzeugt werden. Auf diese Weise können Zusatzinformationen über die Tropfengeometrie erhalten werden. Ferner ermöglicht ein Leuchtdiodenfeld durch geeignete Auswahl der einzeln aktivierbaren Leuchtdioden eine optimale Beleuchtung des Tropfens, ohne dass der Messaufbau verändert werden muss.

Ferner können bei einer weiteren Ausführungsform bei einer insgesamt ausreichenden Beleuchtung der Tropfenoberfläche auch Gitter als Lichtquellen verwendet werden.

Die Kontaktwinkelmessvorrichtung umfasst in einer besonders bevorzugten Ausführungsform eine automatische Tropfendosierungsvorrichtung. Es sind aber auch manuelle Tropfendosierungsvorrichtungen einsetzbar. Da die Bestimmung des Kontaktwinkels auf dem Volumen des Tropfens basiert, ist es notwendig, dass das Volumen reproduzierbar und definiert dosiert werden kann.

Weiter bevorzugt ist die Tropfendosierungsvorrichtung zur Aufbringung des Tropfens auf die Probenoberfläche in dem Gesichtsfeld der Kamera angeordnet. Auf diese Weise kann der Tropfen gezielt auf die gewünschte Stelle der Probenoberfläche aufgebracht werden. Das Erfassen der Abbildungen durch die Kamera erfolgt dann erst nach einem Entfernen der Tropfendosierungsvorrichtung aus dem Gesichtsfeld der Kamera. Dies kann beispielsweise mittels einer geeigneten Bilderkennungssoftware, einer Lichtschranke oder eines Bewegungssensors ermöglicht werden.

In einer weiteren bevorzugten Ausführungsform sind die Lichtquellen definiert beweglich angeordnet. Hierdurch kann die Anordnung der Lichtquellen individuell auf die entsprechende Probe und den auf ihr befindlichen Tropfen abgestimmt werden.

Speziell bevorzugt umfasst die Tropfendosierungsvorrichtung eine Einstellmöglichkeit für das Volumen des Tropfens. Somit können Messungen des Kontaktwinkels bei verschiedenen Volumina des Tropfens durchgeführt werden.

Weiter bevorzugt wählt die Tropfendosierungsvorrichtung das Volumen des Tropfens automatisch, so dass eine Messreihe automatisch durchgeführt werden kann.

Eine speziell bevorzugte Ausführungsform der erfindungsgemäßen Vorrichtung umfasst eine Kamera, deren Optik den auf der Probenoberfläche befindlichen Tropfen automatisch fokussiert. Auf diese Weise können die Distanzen der Abbildung zu der Symmetrieachse bzw. der Abbildungen zueinander schnell und automatisch gemessen werden.

Ferner ist es in einer weiteren, bevorzugten Ausführungsform auch möglich, die Vorrichtung mittels beispielsweise eines Roboterarms an verschiedenen Stellen einer Probe zu verwenden. Hierbei stellt eine automatische Fokussierung eine Zeitersparnis gegenüber einer manuellen Fokussierung dar.

In einer speziell bevorzugten Ausführungsform ist die Kontaktwinkelmessvorrichtung an einem Stativ befestigt, mit dem die Vorrichtung über einer Probenoberfläche positioniert werden kann. Hierdurch können Erschütterungen einzelner Komponenten verhindert werden und es wird ferner ein berührungsloses, automatisiertes Messen des Kontaktwinkels ermöglicht, ohne dass die Probenoberfläche in Kontakt mit der Messapparatur kommt.

In einer bevorzugten Ausführungsform misst ein Sensor den Abstand der Lichtquellen zu der Oberfläche des Tropfens. Auf diese Weise kann der jeweilige Abstand zu der Symmetrieachse des Tropfens und auch der jeweilige Abstand verschiedener Lichtquellen zueinander bestimmt werden und dauerhaft ein gleich bleibender Abstand aufrecht erhalten werden. Bei dem Sensor kann es sich beispielsweise um einen mechanischen Sensor, z.B. einem Abstandhalter, handeln. Es sind aber auch andere Sensoren denkbar, z.B. elektrische (kapazitive oder induktive) oder optische (Laser- oder Bild-) Sensoren, die mit einem geeigneten Abstandhalter elektronisch gekoppelt sind.

Im Folgenden wird die vorliegende Erfindung anhand einer lediglich eine bevorzugte Ausführungsform zeigenden Zeichnung erläutert. In der Zeichnung zeigen

Fig. 1     einen Kontaktwinkel eines Tropfens auf einer Probenoberfläche,

Fig. 2     eine schematische Darstellung einer erfindungsgemäßen Bildanalysevorrichtung,

Fig. 3 a)     eine schematische Darstellung zweier Abbildungen von Lichtquellen auf der Oberfläche eines Tropfens,

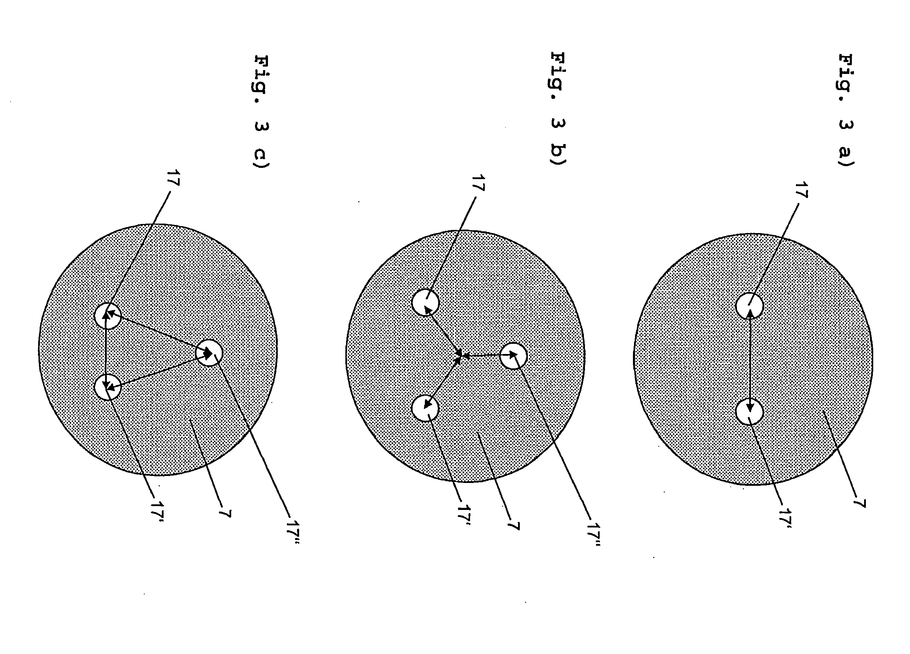

Fig. 3 b)     eine schematische Darstellung dreier Abbildungen von Lichtquellen auf der Oberfläche eines Tropfens und

Fig. 3 c)    eine weitere schematische Darstellung dreier Abbildungen von Lichtquellen auf der Oberfläche eines Tropfens.

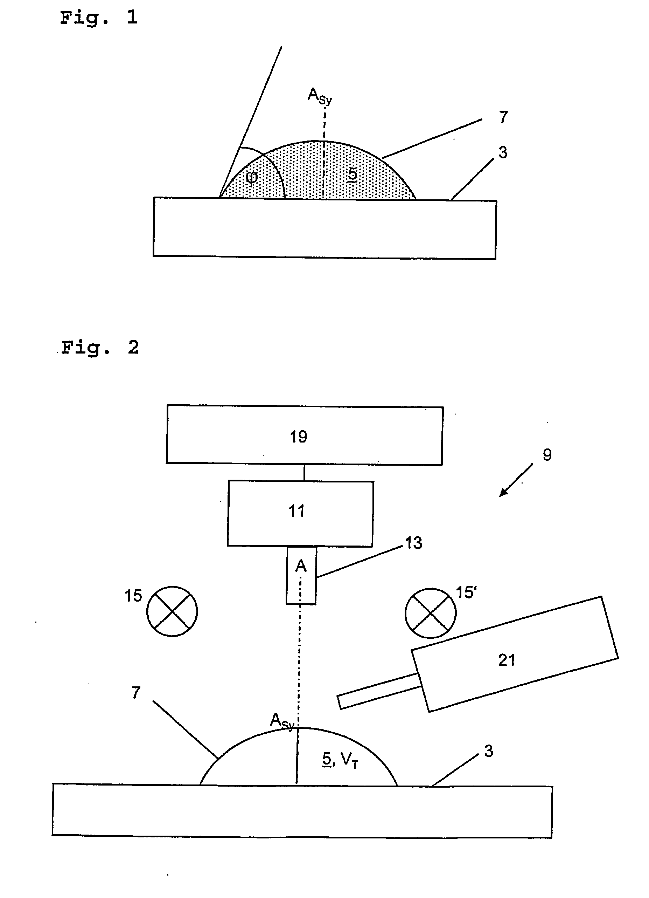

In Fig. 1 ist eine Probe 1 gezeigt, auf deren Oberfläche 3 ein Tropfen 5 aufliegt. Zwischen der Oberfläche 3 einer Probe 1, einer gasförmigen Umgebung und einem auf der Oberfläche 3 der Probe 1 angeordneten Tropfen 5 mit einer gekrümmten Oberfläche 7, einer Symmetrieachse $A_{Sy}$-$A_{Sy}$ und einem bekannten konstanten Volumen $V_T$ liegt der Kontaktwinkel $\varphi$.

Vorzugsweise handelt es sich bei dem Tropfen 5 um eine Flüssigkeit mit guten Reflexionseigenschaften, z.B. einen Wassertropfen.

Das Volumen $V_T$ des Tropfens 5 umfasst bevorzugt nicht mehr als einen Mikroliter. Es sind aber auch größere Volumina denkbar. Die Größenordnung von maximal einem Mikroliter hat den Vorteil, dass der Gravitationseinfluss bei der Berechnung des Krümmungsradius des Tropfens 5 vernachlässigt werden kann.

Die Probe 1 ist vorzugsweise ein Festkörper. Es ist aber auch möglich, dass die Probe 1 beispielsweise ein Gel mit hoher Viskosität ist. Die Probe 1 ist bevorzugt horizontal ausgerichtet und ihre Oberfläche 3 eben. In einer nicht dargestellten Ausführungsform kann die Oberfläche 3 auch Kavitäten aufweisen oder konvex bzw. konkav ausgebildet sein, sofern der Krümmungsradius der Probe ausreichend groß gegenüber dem Tropfendurchmesser ist.

In Fig. 2 ist ein Schema einer erfindungsgemäßen Bildanalysevorrichtung 9 dargestellt. Auf einer vorzugsweise horizontal ausgerichteten Probe 1 befindet sich ein Tropfen 5, der eine vertikal ausgerichtete Symmetrieachse $A_{Sy}$-$A_{Sy}$ hat. In einer nicht dargestellten weiter bevorzugten Ausführungsform ist der Tropfen 5 in einer Kavität angeordnet oder liegt auf einer konvex bzw. konkav ausgebildeten Probe, sofern der Krümmungsradius der Probe ausreichend groß gegenüber dem Tropfendurchmesser ist.

In der dargestellten speziell bevorzugten Anordnung ist eine Kameraoptik 11, deren optische Achse A-A deckungsgleich mit der Symmetrieachse $A_{Sy}$-$A_{Sy}$ des Tropfens 5 verläuft, oberhalb des Tropfens 5 angeordnet. Hierdurch ist der Aufwand zur Bestimmung der Abbildungen gering.

In einer nicht dargestellten Ausführungsform der vorliegenden Erfindung verlaufen die optische Achse A-A und die Symmetrieachse $A_{Sy}$-$A_{Sy}$ nicht deckungsgleich.

Vorzugsweise handelt es sich bei der Kamera 11 um eine digitale oder analoge Videokamera, deren Optik 13 dazu geeignet ist, die Oberfläche 7 des Tropfens 5 abzubilden. Es sind aber auch andere lichtempfindliche Sensoren denkbar.

Ferner umfasst die dargestellte, bevorzugte Ausführungsform der Bildanalysevorrichtung 9 zwei Lichtquellen 15, 15', die symmetrisch und im gleichen Abstand zu der optischen Achse A-A der Kamera 11 und zu der Symmetrieachse $A_{Sy}$-$A_{Sy}$ des Tropfens 5 angeordnet sind. Die beiden Lichtquellen 15, 15' werden auf der Oberfläche 7 des Tropfens 5 abgebildet. Die Lagen der Lichtquellen 15, 15' zueinander oder zu der Symmetrieachse $A_{Sy}$-$A_{Sy}$ sind hierbei bekannt. Dies ermöglicht eine Berechnung der Distanzen der Lichtquellen 15, 15', so dass die Gegenstandshöhe G zur Berechnung des Kontaktwinkels $\varphi$ bekannt ist.

In einer nicht dargestellten, weiter bevorzugten Ausführungsform wird eine Vielzahl von Lichtquellen benutzt.

Die Lichtquellen 15, 15', deren Lagen bekannt sind, können in einer nicht dargestellten Ausführungsform ferner symmetrisch um die optische Achse A-A der Kamera 11 angeordnet sein. Hierdurch können Aussagen über die Symmetrieeigenschaften des Tropfens 5 gewonnen werden.

In einer weiteren Ausführungsform können die Lichtquellen 15, 15', deren Lagen bekannt sind, unsymmetrisch zu der optischen Achse A-A angeordnet sein, so dass sich eine Messung ohne eine genaue Positionierung der Lichtquellen 15, 15' durchführen lässt.

Speziell bevorzugt handelt es sich bei den Lichtquellen 15, 15' um Leuchtdioden, beispielsweise um monochromatische Leuchtdioden oder weiße Leuchtdioden. Diese haben den Vorteil, dass sie eine kleine punktförmige Leuchtfläche haben.

Es ist auch möglich, ein Leuchtdiodenfeld zu verwenden. Dieses kann verschiedene, einzeln aktivierbare Leuchtdioden umfassen, so dass durch Variation der Schaltzustände der Leuchtdiodenmatrix unterschiedliche Objektmuster erzeugt werden können. Auf diese Weise können Zusatzinformationen über die Tropfengeometrie erhalten werden. Ferner ermöglicht ein Leuchtdiodenfeld durch geeignete Auswahl der einzeln aktivierbaren Leuchtdioden eine optimale Beleuchtung des Tropfens 5, ohne dass der Messaufbau verändert werden muss.

In einer weiteren bevorzugten Ausführungsform können diffus strahlende Lichtquellen 15, 15' verwendet werden.

Bei einer ausreichenden Beleuchtung, die eine optische Erfassung der Abbildungen 17, 17' der Lichtquellen 15, 15' auf dem Tropfen 5 ermöglicht, können auch Gitter als Lichtquellen verwendet werden.

Die Kamera 11 ist mit einem Bildanalysesystem 19 verbunden, das die Abbildungen 17, 17' der Lichtquellen 15, 15' aufnehmen und auswerten kann. Hierbei ist es nicht notwendig, dass die mit dem Bildanalysesystem 19 elektrisch verbundene Kamera 11 den Tropfen 5 vollständig abbildet. Zur Berechnung der Distanzen der Abbildungen 17, 17' der Lichtquellen 15, 15' zueinander bzw. zu der Symmetrieachse $A_{Sy}$-$A_{Sy}$ des Tropfens 5 und für die Berechnung des

Kontaktwinkels φ reicht es aus, wenn die Abbildungen 17, 17' und gegebenenfalls auch die Symmetrieachse $A_{Sy}$-$A_{Sy}$ des Tropfens 5 bzw. die optische Achse A-A der Kamera 11 in dem Gesichtsfeld der Kamera 11 und ihrer Optik 13 liegen. Vorzugsweise umfasst die Kamera 11 eine Optik 13, die über eine automatische Fokussierung verfügt, so dass die Abbildungen der Lichtquellen 15 auf der Oberfläche 3 des Tropfens 5 zeitsparend und einfach erfasst werden können. Es ist aber auch möglich, eine Kamera 11 mit einer manuellen Fokussierung zu verwenden.

In einer speziell bevorzugten, nicht dargestellten Ausführungsform umfasst die Bildanalysevorrichtung 9 Abstandssensoren. Diese messen den Abstand der Kamera 11 mit einem bekannten Verlauf ihrer optischen Achse A-A zu den Lichtquellen 15, den Abstand der Lichtquellen 15 zueinander und den Abstand der Lichtquellen 15 zu der Oberfläche 3 der Probe 5. Auf diese Weise ist die Lage der Bild gebenden und Bild erfassenden Komponenten der Messapparatur bekannt, so dass der Abstand der Abbildungen 17 zueinander bzw. zu der Symmetrieachse $A_{Sy}$-$A_{Sy}$ des Tropfens 5 mittels des Bildanalysesystems 19 gemessen bzw. berechnet werden kann. Bei den Sensoren kann es sich um mechanische Sensoren, z.B. einem Abstandhalter, handeln. Es sind aber auch elektrische (kapazitive oder induktive) oder optische (Laser- oder Bild-) Sensoren verwendbar, die mit einem geeigneten Abstandhalter elektronisch gekoppelt sind.

Ferner umfasst die Ausführungsform bevorzugt eine Tropfendosierungsvorrichtung 21. Diese ermöglicht das Aufbringen eines Tropfens 5 mit einem definierten Volumen $V_T$ auf die Oberfläche 3 der Probe 5 in reproduzierbarer Weise. Vorzugsweise handelt es sich um eine automatische Tropfendosierungsvorrichtung 21. Es ist aber auch möglich, eine manuelle Tropfendosierungsvorrichtung 21 zu verwenden. Zur Berechnung des Kontaktwinkels φ ist es notwendig, das Volumen $V_T$ des Tropfens 5 reproduzierbar dosieren zu können.

Zur Ablegung des Tropfens 5 auf die Oberfläche 3 der Probe 1 wird die Tropfendosierungsvorrichtung 21 in räumliche Nähe zu der Stelle der Oberfläche 3 der Probe 1 gebracht, die mit der optischen Achse A-A der Kamera 11 zusammenfällt. Der Tropfen 5 kann somit wenigstens teilweise in dem Gesichtsfeld der Kamera 11 angeordnet werden. Die Aufbringung des Tropfens 5 kann manuell oder auch automatisch erfolgen.

In der dargestellten bevorzugten Ausführungsform kann der Tropfen 5 mittels der Tropfendosierungsvorrichtung 21 gezielt auf die gewünschte Position auf der Oberfläche 3 abgelegt werden. Um die Abbildungen 17 der Lichtquellen 15 mittels der Kamera 11 und dem Bildanalysesystem 19 erfassen zu können, wird die Tropfendosierungsvorrichtung 21 vorzugsweise nach dem Aufbringen des Tropfens 5 aus dem Gesichtsfeld der Kamera 11 entfernt. Dies kann in einer nicht dargestellten Ausführungsform beispielsweise mittels einer mit einer automatischen Tropfendosierungsvorrichtung gekoppelten Bilderkennungssoftware, einer Lichtschranke oder eines Bewegungssensors erfolgen. Vorzugsweise umfasst die Tropfendosierungsvorrichtung 21 eine Einstellmöglichkeit für das Volumen des Tropfens 5, so dass der Kontaktwinkel φ bei verschiedenen Volumen $V_T$ des Tropfens 5 bestimmt werden kann. Speziell bevorzugt wählt die Tropfendosierungsvorrichtung 21 das Volumen $V_T$ des abzulegenden Tropfens 5 automatisch, so dass Messreihen automatisiert durchgeführt werden können.

In Fig. 3 a) sind zwei Abbildungen 17, 17' zweier Lichtquellen 15, 15' auf einer schematisch dargestellten Oberfläche 3 eines Tropfens 5 zu sehen, die symmetrisch zu der Symmetrieachse $A_{Sy}$-$A_{Sy}$ des Tropfens 5 angeordnet sind. Mittels des Bildanalysesystems 19 wird der Abstand der beiden Abbildungen 17, 17' zueinander, d.h. die Bildhöhe B, bestimmt. Aufgrund der bekannten Lage der Lichtquellen 15, 15' kann ferner der Abstand der Lichtquellen 15, 15', d.h. die Gegenstandshöhe G, zueinander und daraus folgend der Kontaktwinkel φ ermittelt werden.

In Fig. 3 b) sind die Abbildungen 17, 17', 17" dreier Lichtquellen 15, 15', 15'' gezeigt. Zur Bestimmung des Kontaktwinkels φ werden die Abstände der Abbildungen 17, 17', 17'' zu der Symmetrieachse $A_{Sy}$-$A_{Sy}$ des Tropfens 5 mittels des Bildanalysesystems 19 ermittelt. Hierbei stimmt die Symmetrieachse $A_{Sy}$-$A_{Sy}$ des Tropfens 5 vorzugsweise mit der optischen Achse A-A der Kamera 11 überein.

Vorzugsweise sind die nicht dargestellten Lichtquellen 15 kreisförmig in einer vertikal zu der Symmetrieachse $A_{sy}$-$A_{sy}$ des Tropfens 5 und zu der optischen Achse A-A der Kamera 11 angeordneten Ebene und in einem Winkel von 120° zueinander angeordnet. Dies ermöglicht ein gleichmäßiges Abbilden der Lichtquellen 15, 15', 15'' auf der Oberfläche 3 des Tropfens 5. Aus den gemessenen Distanzen kann dann durch Mittelwertbildung das Maß für den Krümmungsradius ermittelt werden.

Fig. 3 c) zeigt eine alternative Vorgehensweise zur Ermittlung des Kontaktwinkels φ. Hierbei ist es nicht notwendig, dass die optische Achse A-A der Kamera 11 und die Symmetrieachse $A_{sy}$-$A_{sy}$ des Tropfens 5 deckungsgleich verlaufen, da nur die Abstände der Abbildungen 17, 17', 17'' zueinander mittels des Bildanalysesystems 19 ermittelt werden. Unter Verwendung der Abbildungen 17, 17', 17'' kann ein eindeutiger Kreis konstruiert werden, dessen Radius ein Maß für den Krümmungsradius darstellt, aus dem dann der Kontaktwinkels φ bestimmt werden kann.

**Anhang 1**

Aus Zeichnung 3 lässt sich für das Tropfenvolumen folgender Zusammenhang ableiten:

$$V_T = \int_{R-h}^{R} \pi (\sqrt{R^2 - x^2})^2 \, dx$$

$$= \pi \int_{R-h}^{R} R^2 - x^2 \, dx \qquad (1)$$

$$= \frac{1}{3} \pi h^2 (3R - h)$$

Zunächst wir die unbekannte Größe h berechnet. Die Lösung erfolgt nach dem Verfahren von Cardano.

1. Die allgemeine Form:

$$0 = h^3 - 3Rh^2 + \frac{3}{\pi} V_T \qquad (2)$$

$$Subst.: \quad h = y + R$$

$$-> 0 = (y+R)^3 - 3R(y+R)^2 + \frac{3}{\pi} V_T \qquad (3)$$

$$\rightarrow 0 = y^3 - 3yR^2 - 2R^3 + \frac{3}{\pi} V_T \qquad (4)$$

2. Die Diskriminante T lautet hier:

$$T = \left(\frac{q}{2}\right)^2 + \left(\frac{p}{3}\right)^3 \quad mit \ q = -2R^3 + \frac{3}{\pi} V_T; \ p = -3R^2$$

$$T = \left(-R^3 + \frac{3}{2\pi} V_T\right)^2 + \left(-R^2\right)^3$$

$$= \frac{9}{4\pi^2} V_T^2 - \frac{3}{\pi} V_T R^3$$

$$T = V_T \left(\frac{9}{4\pi^2} V_T - \frac{3}{\pi} R^3\right) \qquad (6)$$

In physikalisch sinnvollen Fällen gilt:

$$V_T \leq \frac{4}{3} \pi R^3$$

woraus unmittelbar folgt:

$$T \leq V_T \left( \frac{9}{4\pi^2} \frac{4}{3} \pi R^3 - \frac{3}{\pi} R^3 \right)$$
$$= V \, R^3(0) = 0$$

Ohne Einschränkung der Anwendung kann der Fall $V_T = V_{Kugel}$ vernachlässigt werden. Der hier also vorliegenden Fall (T<0; "casus irreducibilis"), ermöglicht das Lösen der Gleichung Gl. (4). Es existieren drei reelle Lösungen. Die Formeln dazu lauten:

$$y_i = 2\sqrt[3]{\sqrt{-\left(\frac{p}{3}\right)^3}} \cos\left( \frac{\cos^{-1}\left( -\frac{q}{2\sqrt{-\left(\frac{p}{3}\right)^3}} \right)}{3} + \vartheta_i \right) \tag{7}$$

mit $i \in \{1,2,3\}$; $\vartheta_i \in \{0°,120°,240°\}$ und p, q wie oben substituiert.

$$y_i = 2\left(-\frac{p}{3}\right)^{\frac{1}{2}} \cos\left( \frac{\cos^{-1}\left( -\frac{q}{2}\left(-\frac{p}{3}\right)^{-\frac{3}{2}} \right)}{3} + \vartheta_i \right) \tag{8}$$

Rücksubstitution von p und q:

$$y_i = 2\left(-\frac{\left(-3R^2\right)}{3}\right)^{\frac{1}{2}} \cos\left(\frac{\cos^{-1}\left(-\frac{\left(-2R^3+\frac{3}{\pi}V_T\right)}{2}\frac{1}{\left(-\frac{\left(-3R^2\right)}{3}\right)^{\frac{3}{2}}}\right)}{3}+\vartheta_i\right)$$

$$(9)$$

$$= 2R\cos\left(\frac{\cos^{-1}\left(R^{-3}\left(R^3-\frac{3}{2\pi}V_T\right)\right)}{3}+\vartheta_i\right) = 2R\cos\left(\frac{\cos^{-1}\left(1-\frac{3}{2\pi}\frac{V_T}{R^3}\right)}{3}+\vartheta_i\right)$$

Die Rücksubstitution von h, Gl. (3) führt dann auf:

$$h_i = y_i + R$$

$$\Rightarrow \quad h_i = 2R\cos\left(\frac{\cos^{-1}\left(1-\frac{3}{2\pi}\frac{V_T}{R^3}\right)}{3}+\vartheta_i\right) + R$$

$$= R\left[2\cos\left(\frac{\cos^{-1}\left(1-\frac{3}{2\pi}\frac{V_T}{R^3}\right)}{3}+\vartheta_i\right)+1\right]$$

$$(10)$$

Wie experimentell gezeigt werden kann, bringt nur die dritte Lösungsformel mit $\vartheta_3 = 240°$ sinnvolle Ergebnisse. Damit ist Gl. (2) gelöst.

Aus Zeichnung 1 lässt sich weiterhin folgender Zusammenhang zwischen h und dem Kontaktwinkel $CA=\varphi$ ableiten:

$$\cos(\varphi) = \left(\frac{R-h_i}{R}\right)$$

$$\Rightarrow \quad CA = \varphi = \cos^{-1}\left(\frac{R-h_i}{R}\right)$$

$$(11)$$

Der Tropfen wird in guter Nährung als idealer Wölbspiegel betrachtet. Um diese Nährung gut zu erfüllen, sind Flüssigkeiten mit kleinem Brechungsindex zu verwenden.

Es gilt dann die Abbildungsgleichung für Spiegel (im achsennahen Bereich) aus der Strahlenoptik:

$$\frac{1}{g} + \frac{1}{b} = \frac{1}{f} \tag{12}$$

mit $f = \dfrac{R}{2}$ und $m = \dfrac{b}{g} = \dfrac{B}{G}$ .

Hieraus folgt durch Einsetzen und Umformen nach R:

$$R = 2g\left(1 + \frac{G}{B}\right)^{-1} \tag{13}$$

Setzt man Gl. (10) mit $\vartheta_3 = 240° = \dfrac{4}{3}\pi$ in Gl. (11) ein, ergibt sich:

$$CA = \varphi = \cos^{-1}\left(\frac{R - h_i}{R}\right)$$

$$= \cos^{-1}\left(\frac{R - R\left[2\cos\left(\frac{\cos^{-1}\left(1 - \frac{3}{2\pi}\frac{V_T}{R^3}\right)}{3} + \frac{4}{3}\pi\right) + 1\right]}{R}\right)$$

$$= \cos^{-1}\left(1 - \left[2\cos\left(\frac{\cos^{-1}\left(1 - \frac{3}{2\pi}\frac{V_T}{R^3}\right)}{3} + \frac{4}{3}\pi\right) + 1\right]\right)$$

$$= \cos^{-1}\left(-2\cos\left(\frac{\cos^{-1}\left(1 - \frac{3}{2\pi}\frac{V_T}{R^3}\right)}{3} + \frac{4}{3}\pi\right)\right) \tag{14}$$

Mit Gl. (13) folgt dann:

$$CA = \varphi = \cos^{-1}\left(-2\cos\left(\frac{\cos^{-1}\left(1-\frac{3}{2\pi}\frac{V_T}{\left(2g\left(1+\frac{G}{B}\right)^{-1}\right)^3}\right)}{3}+\frac{4}{3}\pi\right)\right)$$

$$= \cos^{-1}\left(-2\cos\left(\frac{\cos^{-1}\left(1-\frac{3\left(1+\frac{G}{B}\right)^3 V_T}{16\pi g^3}\right)}{3}+\frac{4}{3}\pi\right)\right) \qquad (15)$$

Verwendete Symbole und Zeichen

| | |
|---|---|
| $V_T$ | Tropfenvolumen ; $[V_T] = \mu l = mm^3$ |
| R | Radius der virtuellen Kugel aus welcher der echte Tropfen ein Segment darstellt; [R] = mm |
| H | Höhe des Tropfens; [h] = mm |
| p, q | Hilfsvariablen in Rechnungen (definiert und erklärt in jeweiliger Rechnung) |
| f | Bildbrennweite (hier =Objektbrennweite) [f] = mm |
| g | Gegenstandsweite (Abstand Lichtquelle - Tropfenscheitelpunkt) [g] =mm |
| b | Bildweite (Abstand Abbildung - Tropfenscheitelpunkt) [b] = mm |
| B | Bildhöhe (Abstand optische Achse - Reflexion) [B] =mm |
| G | Gegenstandshöhe (Abstand optische Achse - Lichtquelle) [G] = mm |
| CA | Kontaktwinkel [CA] = ° |

**Patentansprüche**

1. Verfahren zur Bestimmung des Kontaktwinkels ($\varphi$) zwischen einer Probenoberfläche (3), einer gasförmigen Umgebung und einem auf der Probenoberfläche (3) angeordneten Tropfen (5), wobei der Tropfen (5) eine gekrümmte Oberfläche (7), eine Symmetrieachse ($A_{Sy}$-$A_{Sy}$) und ein definiertes Volumen (VT) hat und das Verfahren die folgenden Schritte aufweist:

    a) Abbilden eines Objekts aufgrund der Reflexionseigenschaften der Oberfläche (7) des Tropfens (5), wobei die Lage des Objekts zu der optischen Achse (A-A) eines optischen Messsystems und die Lage des Objekts zu der Probenoberfläche (3) bekannt ist und wobei die Symmetrieachse ($A_{Sy}$-$A_{Sy}$) des Tropfens (5) in der optischen Achse (A-A) angeordnet ist,
    b) Messen der Distanz zwischen der Abbildung des Objekts und der Symmetrieachse ($A_{Sy}$-$A_{Sy}$) des Tropfens (5),

c) Bestimmen des Krümmungsradius des Tropfens (5) mittels der gemessenen Distanz und

d) Bestimmen des Kontaktwinkels (φ) mittels des Krümmungsradius.

2. Verfahren zur Bestimmung des Kontaktwinkels (φ) zwischen einer Probenoberfläche (3), einer gasförmigen Umgebung und einem auf der Probenoberfläche (3) angeordneten Tropfen (5), wobei der Tropfen (5) eine gekrümmte Oberfläche (7), eine Symmetrieachse (ASy-ASy) und ein definiertes Volumen (VT) hat und das Verfahren die folgenden Schritte aufweist:

a) Abbilden einer Vielzahl von Objekten aufgrund der Reflexionseigenschaften der Oberfläche (7) des Tropfens (5), wobei die Lage der Objekte zueinander, zu der optischen Achse (A-A) eines optischen Messsystems und die Lage der Objekte zu der Probenoberfläche (3) bekannt sind,

b) Messen der Distanzen der Abbildungen der Objekte zueinander,

c) Bestimmen des Krümmungsradius des Tropfens (5) mittels der gemessenen Distanzen und

d) Bestimmen des Kontaktwinkels (φ) mittels des Krümmungsradius.

3. Verfahren nach Anspruch 2, wobei Schritt a) das Abbilden zweier Objekte umfasst.

4. Verfahren nach Anspruch 2, wobei Schritt a) das Abbilden dreier Objekte umfasst.

5. Verfahren nach Anspruch 4, wobei Schritt b) das Legen eines Kreises durch die Abbildungen der Objekte und das Ermitteln des Radius des Kreises als Maß für die Krümmung der Oberfläche (7) des Tropfens (5) umfasst.

6. Verfahren nach einem der Ansprüche 2 bis 5, wobei Schritt a) das Abbilden kreisförmig angeordneter Objekte umfasst.

7. Verfahren nach einem der Ansprüche 2 bis 6, wobei Schritt a) das Abbilden einer Vielzahl von Objektpaaren mit jeweils einem ersten Objekt und einem zweiten Objekt umfasst und dass Schritt b) das Bestimmen der Distanzen zwischen der Abbildung eines ersten Objekts und der Abbildung eines zweiten Objekts für eine Vielzahl von Objektpaaren umfasst.

8. Verfahren nach Anspruch 6 oder 7, wobei ein Schritt e) das Berechnen der Streuung der Distanzen der Abbildungen der Objekte zu der Symmetrieachse ($A_{Sy}$-$A_{Sy}$) des Tropfens (5) zur Ermittlung der Symmetrie des Tropfens (5) umfasst und wobei ein Schritt f) das Berechnen der Genauigkeit des mittels des Krümmungsradius ermittelten Kontaktwinkels (φ) umfasst.

9. Verfahren nach einem der vorhergehenden Ansprüche, wobei das optische Messsystem eine digitale oder analoge Videokamera aufweist.

10. Verfahren nach einem der vorhergehenden Ansprüche, wobei die Objekte Lichtquellen (15) sind.

11. Verfahren nach Anspruch 10, wobei die Lichtquellen (15) Leuchtdioden sind.

12. Verfahren nach einem der Ansprüche 1 bis 11, wobei das Bestimmen des Kontaktwinkels (φ) mittels einer optisch-geometrischen Gleichung in Abhängigkeit von der in Schritt b) ermittelten Distanz bzw. von den in Schritt b) ermittelten Distanzen erfolgt.

13. Verfahren nach einem der Ansprüche 1 bis 11, wobei das Bestimmen des Kontaktwinkels (φ) mittels einer Korrelationstabelle erfolgt.

14. Verfahren nach einem der Ansprüche 1 bis 11, wobei das Bestimmen des Kontaktwinkels (φ) mittels einer Regressionsanalyse erfolgt.

15. Bildanalysevorrichtung (9) zur Messung des Kontaktwinkels (φ) zwischen einer Probenoberfläche (3), einer gasförmigen Umgebung und einem auf der Probenoberfläche (3) angeordneten Tropfen (5) mit

- einer Probenoberfläche (3), deren Lage bekannt ist,
- einer Tropfendosierungsvorrichtung (21) zur Aufbringung eines Tropfens (5) mit einem definierten Volumen ($V_T$) auf die Probenoberfläche (3), wobei der Tropfen (5) eine Symmetrieachse ($A_{Sy}$-$A_{Sy}$) hat,

- einer Lichtquelle (15), deren Lage bekannt ist,
- einer Kamera (11) mit einer Optik (13), wobei die Lage der optischen Achse der Kamera (11) bekannt ist, und
- einem Bildanalysesystem (19), das mit der Kamera (11) verbunden ist, **dadurch gekennzeichnet, dass**
- die Kamera (11) mit der Optik (13) zur Erfassung einer Abbildung (17) der Lichtquelle (15) auf dem Tropfen (5) ausgebildet ist und
- das Bildanalysesystem (19) dazu ausgestaltet ist, die Distanz der Abbildung (17) der Lichtquelle (15) zu der Symmetrieachse ($A_{Sy}$-$A_{Sy}$) des Tropfens (5) zu bestimmen.

16. Bildanalysevorrichtung (9) zur Messung des Kontaktwinkels ($\varphi$) zwischen einer Probenoberfläche (3), einer gasförmigen Umgebung und einem auf der Probenoberfläche (3) angeordneten Tropfen (5) mit

- einer Probenoberfläche (3), deren Lage bekannt ist,
- einer Tropfendosierungsvorrichtung (21) zur Aufbringung eines Tropfens (5) mit einem definierten Volumen (VT) auf die Probenoberfläche (3), wobei der Tropfen (5) eine Symmetrieachse (ASy-ASy) hat,
- einer Vielzahl von Lichtquellen (15), deren Lagen bekannt sind,
- einer Kamera (11) mit einer Optik (13), wobei die Lage der optischen Achse der Kamera (11) bekannt ist, und
- einem Bildanalysesystem (19), das mit der Kamera (11) verbunden ist, **dadurch gekennzeichnet, dass**
- die Kamera (11) mit der Optik (13) zur Erfassung von Abbildungen (17) der Lichtquellen (15) auf dem Tropfen (5) ausgebildet ist und
- das Bildanalysesystem (19) dazu ausgestaltet ist, die Distanzen der Abbildungen (17) der Lichtquellen (15) zueinander zu bestimmen.

**Claims**

1. A method for determining the contact angle ($\varphi$) between a sample surface (3), a gaseous environment and a drop (5) arranged on the sample surface (3), the drop (5) having a curved surface (7), a symmetry axis (ASy-ASy) and a defined volume (VT), the method comprising the following steps:

   a) imaging an object on the basis of the reflection properties of the surface (7) of the drop (5), the position of the object with respect to the optical axis (A-A) of an optical measuring system and the position of the object with respect to the sample surface (3) being known, and the symmetry axis (ASy-ASy) of the drop (5) being arranged in the optical axis (A-A);
   b) measuring the distance between the image of the object and the symmetry axis (ASy-ASy) of the drop (5);
   c) determining the radius of curvature of the drop (5) from the measured distance; and
   d) determining the contact angle ($\varphi$) from the radius of curvature.

2. A method for determining the contact angle ($\varphi$) between a sample surface (3), a gaseous environment and a drop (5) arranged on the sample surface (3), the drop (5) having a curved surface (7), a symmetry axis (ASy-ASy) and a defined volume (VT), the method comprising the following steps:

   a) imaging a plurality of objects on the basis of the reflection properties of the surface (7) of the drop (5), the position of the objects with respect to one another, with respect to the optical axis (A-A) of an optical measuring system and the position of the objects with respect to the sample surface (3) being known;
   b) measuring the distances between the images of the objects from one another;
   c) determining the radius of curvature of the drop (5) from the measured distances; and
   d) determining the contact angle ($\varphi$) from the radius of curvature.

3. A method according to claim 2, wherein step a) includes imaging of two objects.

4. A method according to claim 2, wherein step a) includes imaging of three objects.

5. A method according to claim 4, wherein step b) includes placing a circle through the images of the objects, and determining the radius of the circle as a measure of the curvature of the surface (7) of the drop (5).

6. A method according to any of the claims 2 to 5, wherein step a) includes imaging of circularly arranged objects.

7. A method according to any of the claims 2 to 6, wherein step a) includes imaging of a plurality of object pairs, each with a first object and a second object, and wherein step b) includes determining the distances between the image of a first object and the image of a second object for a plurality of object pairs.

8. A method according to claim 6 or 7, wherein a step e) includes calculating the spread of the distances of the images of the objects from the symmetry axis (ASy-ASy) of the drop (5) to determine the symmetry of the drop (5), and wherein a step f) includes calculating the accuracy of the contact angle ($\varphi$) determined from the radius of curvature.

9. A method according to any of the preceding claims, wherein the optical measuring system comprises a digital or analogue video camera.

10. A method according to any of the preceding claims, wherein the objects are light sources (15).

11. A method according to claim 10, wherein the light sources (15) are light-emitting diodes.

12. A method according to any of the claims 1 to 11, wherein the determination of the contact angle ($\varphi$) is carried out by a geometrical-optics equation as a function of the distance determined in step b) or of distances determined in step b), respectively.

13. A method according to one of the claims 1 to 11, wherein the determination of the contact angle ($\varphi$) is carried out by means of a correlation table.

14. A method according to one of the claims 1 to 11, wherein the determination of the contact angle ($\varphi$) is carried out by means of a regression analysis.

15. An image analysis device (9) for measuring the contact angle ($\varphi$) between a sample surface (3), a gaseous environment and a drop (5) arranged on the sample surface (3), with:

- a sample surface (3) having a known position,
- a drop dosing device (21) for applying a drop (5) with a defined volume (VT) onto the sample surface (3), the drop having a symmetry axis (ASy-ASy);
- a light source (15) having a known position,
- a camera (11) having optics (13), wherein the position of the optical axis of the camera (11) is known, and
- an image analysis system (19) connected to the camera (11), **characterized in that**
- the camera (11) with the optics (13) is adapted to record an image (17) of the light source (15) on the drop (5) and
- the image analysis system (19) is adapted to determine the distance of the image (17) of the light source (15) from the symmetry axis (ASy-ASy) of the drop (5).

16. An image analysis device (9) for measuring the contact angle ($\varphi$) between a sample surface (3), a gaseous environment and a drop (5) arranged on the sample surface (3), with:

- a sample surface (3) having a known position,
- a drop dosing device (21) for applying a drop (5) with a defined volume (VT) onto the sample surface (3), the drop having a symmetry axis (ASy-ASy);
- a plurality of light sources (15) having known positions,
- a camera (11) having optics (13), wherein the position of the optical axis of the camera (11) is known, and
- an image analysis system (19) connected to the camera (11), **characterized in that**
- the camera (11) with the optics (13) is adapted to record images (17) of the light sources (15) on the drop (5) and
- the image analysis system (19) is adapted to determine the distances of the images (17) of the light sources (15) from one another.

**Revendications**

1. Procédé destiné à la détermination de l'angle de contact ($\varphi$) entre une surface d'échantillon (3), un environnement gazeux et une goutte disposée (5) sur la surface d'échantillon (3), la goutte (5) ayant une surface (7) courbée, un axe de symétrie (ASy-ASy) et un volume (VT) défini, le procédé comportant les étapes suivantes:

a) imager un objet en raison des propriétés de réflexion de la surface (7) de la goutte (5), la position de l'objet par rapport à l'axe optique (A-A) d'un système de mesure optique et la position par rapport à la surface d'échantillon (3) étant connues et l'axe de symétrie (Asy-ASy) de la goutte (5) étant arrangé dans l'axe optique (A-A),

b) mesurer la distance entre l'image de l'objet et l'axe de symétrie (ASy-ASy) de la goutte (5),

c) déterminer le rayon de courbure de la goutte (5) moyennant la distance mesurée et

d) déterminer l'angle de contact (φ) moyennant le rayon de courbure.

2. Procédé destiné à la détermination de l'angle de contact (φ) entre une surface d'échantillon (3), un environnement gazeux et une goutte disposée (5) sur la surface d'échantillon (3), la goutte (5) ayant une surface (7) courbée, un axe de symétrie (ASy-ASy) et un volume (VT) défini, le procédé comportant les étapes suivantes:

a) imager une pluralité d'objets en raison des propriétés de réflexion de la surface (7) de la goutte (5), la position des objets entre les uns et les autres, la position des objets par rapport à l'axe optique (A-A) d'un système de mesure optique et la position des objets par rapport à la surface d'échantillon (3) étant connues,

b) mesurer les distances des images des objets entre eux,

c) déterminer le rayon de courbure de la goutte (5) moyennant les distances mesurées et

d) déterminer l'angle de contact (φ) moyennant le rayon de courbure.

3. Procédé selon la revendication 2, dans lequel l'étape a) comporte former des images de deux objets.

4. Procédé selon la revendication 2, dans lequel l'étape a) comporte former des images de trois objets.

5. Procédé selon la revendication 2, dans lequel l'étape b) comporte la mise d'un cercle à travers les images des objets et la détermination du rayon dudit cercle comme mesure pour la courbure de la surface (7) de la goutte (5).

6. Procède selon l'une quelconque des revendications 2 à 5, dans lequel l'étape a) comporte former des images d'objets arrangés en forme de cercle.

7. Procède selon l'une quelconque des revendications 2 à 6, dans lequel l'étape a) comporte former des images d'une pluralité de paires d'objets avec chaque fois un premier objet et un deuxième objet, et l'étape b) comporte la détermination des distances entre l'image d'un premier objet et l'image d'un deuxième objet pour une pluralité de paires d'objet.

8. Procédé selon la revendication 6 ou 7, dans lequel une étape e) comporte le calcul de la dissipation des distances des images des objets par rapport à l'axe de symétrie (ASy-ASy) de la goutte (5) afin de déterminer la symétrie de la goutte (5), et dans lequel une étape f) comporte le calcul de l'exactitude de l'angle de contact (φ) déterminé moyennant le rayon de courbure.

9. Procédé selon une des revendications précédentes, dans lequel le système de mesure optique comporte une caméra vidéo numérique ou analogue.

10. Procédé selon une des revendications précédentes, dans lequel les objets sont des sources de lumière (15).

11. Procédé selon la revendication 10, dans lequel les sources de lumière (15) sont des diodes lumineuses.

12. Procède selon l'une quelconque des revendications 1 à 11, dans lequel la détermination de l'angle de contact (φ) est faite moyennant une équation optique-géométrique en fonction de la distance déterminée dans l'étape b) ou respectivement des distances déterminées dans l'étape b).

13. Procède selon l'une quelconque des revendications 1 à 11, dans lequel la détermination de l'angle de contact (φ) est faite moyennant une table de corrélation.

14. Procède selon l'une quelconque des revendications 1 à 11, dans lequel la détermination de l'angle de contact (φ) est faite moyennant une analyse par régression.

15. Dispositif d'analyse d'images (9) destiné à la détermination de l'angle de contact (φ) entre une surface d'échantillon (3), un environnement gazeux et une goutte disposée (5) sur la surface d'échantillon (3), avec

- une surface d'échantillon (3) dont la position est connue,

- un dispositif de dosage de gouttes (21) pour la mise d'une goutte (5) avec un volume défini (VT) à la surface d'échantillon (3), la goutte (5) ayant un axe de symétrie (ASy-ASy),
- une source de lumière (15), dont la position est connue,
- une caméra (11) avec un système optique (13), la position de l'axe optique de la caméra (11) étant connue,
- un système d'analyse d'images (19) qui est relié à la caméra (11), **caractérisé en ce que**
- la caméra (11) avec le système optique (13) est construite pour acquérir une image (17) de la source de lumière (15) sur la goutte (5), et
- le système d'analyse d'images (19) est construit pour déterminer la distance de l'image (17) de la source de lumière (15) à l'axe de symétrie (ASy-ASy) de la goutte (5).

16. Dispositif d'analyse d'images (9) destiné à la détermination de l'angle de contact (φ) entre une surface d'échantillon (3), un environnement gazeux et une goutte disposée (5) sur la surface d'échantillon (3), avec

- une surface d'échantillon (3) dont la position est connue,
- un dispositif de dosage de gouttes (21) pour la mise d'une goutte (5) avec un volume défini (VT) à la surface d'échantillon (3), la goutte (5) ayant un axe de symétrie (ASy-ASy),
- une pluralité de sources de lumière (15), dont les positions sont connues,
- une caméra (11) avec un système optique (13), la position de l'axe optique de la caméra (11) étant connue,
- un système d'analyse d'images (19) qui est relié à la caméra (11), **caractérisé en ce que**
- la caméra (11) avec le système optique (13) est construite pour acquérir des images (17) des sources de lumière (15) sur la goutte (5), et
- le système d'analyse d'images (19) est construit pour déterminer les distances des images (17) des sources de lumière (15) de l'une à l'autre.

Fig. 1

Fig. 2

Fig. 3 a)

Fig. 3 b)

Fig. 3 c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19754765 C1
- KR 1020020074797 A
- JP 60085353 A
- WO 03073045 A1
- US 4572628 A

**In der Beschreibung aufgeführte Nicht-Patentliteratur**

- Measurement of Contact Angle in Systems Involving Liquid Metals. *Meas. Sci. Technol.,* 1996, vol. 7, 753-757